# EUROPEAN PATENT APPLICATION

(11) **EP 3 333 272 A1**
(43) Date of publication of application: **13.06.2018**
(21) Application number: 16203226.2
(22) Date of filing: 09.12.2016
(51) Int. Cl.: C22B 1/00, C22B 1/02, C22B 3/00, C22B 7/02

(54) **PROCESS FOR SELECTIVE REMOVAL OF ZINC FROM METALLURGICAL PLANT WASTE**

(71) Applicant: Tata Steel Nederland Technology B.V., 1951 JZ Velsen-Noord (NL)
(72) Inventor: PEETERS, Tim, 1970 CA IJMUIDEN (NL); XIAO, Yanping, 1970 CA IJMUIDEN (NL); YANG, Yongxiang, 2631 MH NOOTDORP (NL)
(74) Representative: Blauw, Frans Gerard

(57) **Abstract**

A process for selectively reducing the amounts of heavy metals comprising Zn from a metallurgical plant waste product containing Fe comprising the steps of:
- selectively leaching Zn by mixing the waste product with a leaching solution comprising ammonia and an ammonium salt with a pH in the range of 8-12 into a reaction mixture, and
- controlling the pH of the reaction mixture and keeping the pH in the range of 8-12.

## Description

The present invention relates to the treatment of metallurgical plant waste products comprising iron and heavy metals. In particular, it relates to a method for the selective removal or reduction of the amount of Zn from metallurgical plant waste products, preferably from the blast furnace (BF) and/or basic oxygen furnace (BOF) residues in order to recover materials, which can be for example recycled in a sinter plant and blast furnace or in an electrical arc furnace (EAF), cupola furnace, oxycup furnace, submerged arc furnace (SAF), plasma furnace, rotary hearth furnace, etc.

The metallurgical industry generates various forms of wastes containing pollutant elements. It is estimated that BF and BOF produces 20-25 kg of dust and sludge per 1 ton of produced steel. The sludge or dust is composed of different compounds and could comprise compounds containing Fe, C, Zn, Pb, Cd, Cr, Mg, Mn and other elements. In order to reduce the environmental impact and operating costs, it is desirable to recycle these materials.

The use of waste products in the form of sludge or dust comprising the compounds indicated above as secondary raw materials in the BF is not very well possible because of the presence of in particular Zn. The content of Zn may reach 5 wt% or even more, and the content of Pb and Cd may be present up to 3.5 and up to 1.0 wt% respectively. It is thus almost impossible to directly use these waste products in a metallurgical or associated installations without affecting the operation thereof, for example a high Zn content would seriously affect a proper operation of the blast furnace.

In a sinter plant, a fraction of the blast furnace flue dust is not used to prevent sinter material with too high zinc levels coming into the blast furnace. Blast furnace dust is first separated into coarse dry dust and wet sludge from the off-gas. The dry dust is collected in a dust bag and directly reused via the sinter plant due to the lower zinc contents. The wet sludge is separated by hydro-cyclones, and usually three fractions with different zinc levels are obtained. The smaller size fractions contain higher zinc.

As a result fractions of sludge or dust containing a high zinc amount are dumped inside or outside the site area. However storing or landfilling of hazardous waste has environmental consequences if not properly managed. In the long-term the storage of hazardous material could lead to a severe environmental problem, e.g. if there is a leakage of high amounts of heavy metals into the groundwater. From an economic point of view, the dumping of these materials cannot be regarded as an advantageous solution. The available storage capacity in a plant area is rather limited and the costs linked to an external dumping are high. Thus, there are enough reasons to find an alternative solution to storing or landfilling large amount of dust and sludge.

Several methods for recycling sludge or dust from metallurgical plants have been proposed and developed in the past. One of them relates to the hydrometallurgical treatment of the metallurgical plant waste products. Hydrometallurgy is typically divided into leaching, solution concentration and purification, and metal or metal compound recovery. The working principle of leaching is to remove certain components from a waste product by the action of a percolating liquid.

With respect to the leaching, research has been done in particular on the acidic leaching of BF dust or sludge. Although this method seems to be effective in Zn leaching it also dissolves high amounts of Fe present in the sludge. It has been reported that under acidic leaching conditions the Fe extraction is about 6 wt% or even more (wt% based on the total amount Fe being present in the sludge). The acidic leaching generally involves the use of strong acids. However, this type of process shows several drawbacks. The main drawbacks are that it is difficult to efficiently control the leaching operation, and the selectivity is limited.

In other processes high pressures and temperatures during leaching are required making said processes economically and operatively not preferred for industrial applications as they require pressure vessels made of costly high grade materials in addition to high energy costs.

Although there is a continuous need in the steel industry to convert waste products containing iron, carbon and heavy metals into reusable iron and carbon resources, there is still not a satisfying and economically attractive process for the selective removal or reduction of the amount of Zn from a waste material comprising Fe and heavy metals, such as BF or BOF dust or sludge.

The main problems for a selective removal of Zn from BF or BOF dust or sludge comprising Fe and heavy metals is the low recovery rate and the ineffectiveness in removing all unwanted species from the wastes and the complex processing thereof.

It is therefore an object of the present invention to provide a solution to the aforementioned problems.

It is further an object of the present invention to provide an efficient and easy to implement process, which allows to selectively separate or reduce the amount of Zn from metallurgical plant residues comprising Fe and heavy metals.

It is a further object to provide a low cost process for the selective removal or reduction of the amounts of Zn from metallurgical plant waste products comprising Fe and heavy metals compared to the current ones.

It is a further object of the present invention to provide an improved process for the selective removal or reduction of the amounts of Zn from metallurgical plant wastes comprising Fe and heavy metals and thereby produce a material which is low in Zn and can be directly used as secondary resource in the metallurgical processes such as sinter plant or BF.

It is a further object of the present invention to provide a process for the selective removal or reduction of the amount of Zn from metallurgical plant wastes comprising Fe and heavy metals, which uses by-products produced in the plant, thus saving resources and costs.

It is a further object of the invention to recycle and reuse as many as possible reagents or products used in the process.

One or more objects have been achieved by the present invention by providing a process for selectively reducing the amounts of heavy metals comprising Zn from a metallurgical plant waste product containing Fe comprising the steps of:
- selectively leaching Zn by mixing the waste product with a leaching solution comprising ammonia and an ammonium salt with a pH in the range of 8-12 into a reaction mixture, and
- controlling the pH of the reaction mixture and keeping the pH in the range of 8-12.

The process according to the present invention allows to efficiently and selectively separate or reduce the amount of Zn from metallurgical plant wastes, such as BF or BOF sludge or a mixture thereof, due to the use of an ammoniacal leaching solution comprising ammonia and an ammonium salt, wherein the pH of the reaction mixture after addition of the leaching solution is in the range of 8-12.

The wastes of a metallurgical process usually comprise heavy metals, such as Zn, Pb, and/or Cd in form of e.g. oxide, sulfide or ferrite. The inventors have found that applying an ammoniacal leaching step and a conversion treatment step according to the present invention Zn can be removed in high yields from the waste. After removal or reduction of the amount of Zn from the initial waste, the remaining residue (solids) can be directly reused in a metallurgical plant operation as secondary resource for iron making.

According to the process the metallurgical plant waste product is treated with a leaching solution comprising ammonia and an ammonium salt at a pH range of 8-12. One of the advantages applying such leaching conditions is that the process can be better controlled compared to the current processes, which is essential for the degree of recovery or removal of Zn from the initial waste product. Ammonia selectively forms water soluble ammonia complexes with Zn-ions and their stability is highly influenced by the pH.

The inventors have found that leaching with an ammoniacal leaching solution according to the present invention is not only effective in selectively separating Zn from the compounds in the sludge, but it is also possible to extract (leach) other heavy metals such as Pb and/or Cd, provided that said metals are also present in the sludge. If Pb and Cd are present the inventors observed that under the above conditions not only stable water soluble Zn amino complexes are formed but also Pb- and Cd- amino complexes. The inventors found that if Pb and/or Cd are present at least 40 wt% Pb and/or 50 wt% Cd are leached (wt% are based on the total amount of Pb and Cd being present in the residue). The resulting residue contains said elements in such low amounts that it can directly be reused.

The inventors observed that under the ammoniacal conditions according to the present invention Fe also dissolves but only in very small amounts. Due to the careful selection of the pH range and the ability to better control the pH range the amount of Fe in the leaching filtrate is at most 1 wt%.

The inventors also observed that by adding a leaching solution according to the present invention the pH fluctuations are minimal. Due to the stability of the pH no side-reactions and/or formation of undesirable insoluble by-products occurred. Such phenomena may occur, if the pH is outside the claimed pH range. Thus a restriction to a pH value of 8-12 is essential. Good results have been obtained when the pH is in the range of 8-11. Advantageously the pH is in the range of 8.5 to 10.5.

Although the process could also be done with NaOH, the inventors found that using ammonia instead of NaOH is advantageous, because ammonia is cheaper, less corrosive, and the pH conditions can be better controlled due to the buffer effect (ammonia and ammonium salt). In addition ammonia has a good regeneration potential. Further sodium is an unwanted element in blast furnace feed.

In a preferred embodiment the process according to the present invention further comprises the steps of:
- separating the reaction mixture into a leaching filtrate and a leached solid residue, and
- recovering Zn from the leaching filtrate

With the separation of the reaction mixture and the recovery of Zn from the leaching filtrate a regenerated leaching solution is obtained comprising ammonia and an ammonium salt suitable for reuse in the process. Suitable separation methods include electrowinning, filtration, decantation, centrifugation and like methods. For the reuse of the leaching solution minimum amounts of supplementary ammonia and ammonium salts are added during the process. This is advantageous in view of minimizing the overall process cost. Moreover, if the process according to the invention is carried out at an integrated steel plant at least part of the required ammonia and ammonia salts can be acquired from a coking plant as by-products of the coking process.

According to a further aspect of the invention the waste product is subjected to two or more leaching steps. One or more further leaching steps are necessary if the amount of Zn removed in a first or a successive leaching step is not sufficient to lower the amount of Zn in the leached solid residue to an acceptable level for reuse.

According to a further aspect of the invention successive leaching steps are carried out in a counter current system. In such a counter current system the sludge is leached in successive reactors wherein the leached solid residue from a first leaching step in a first reactor is moved to a second reactor for a second leaching step. From at least part of the leaching filtrate from the first reactor the Zn and/or other heavy metals are separated after which the regenerated leaching solution can be used in the second reactor. Part of the leaching solution or reaction mixture of the second reactor is fed to the first reactor to be used in the first leaching step. In this way a system is obtained with as many reactors as necessary wherein the solid residue or partly leached solid residue is moved in a downstream direction from one reactor to the next, whereas the leaching solution is moved in an upstream direction.

The inventors found that when the metallurgical waste product is treated with two consecutive leaching steps that the remaining leached solid residue comprises Zn, and also Pb and/or Cd in such low amounts that it can be reused. In most cases the leached solid residue is subjected to a drying step before the reuse thereof. Such reuse is for example making sintered material which is used as a secondary resource for iron making in a blast furnace.

It is further provided that the process comprises a conversion treatment of the waste product and/or of a leached solid residue to convert otherwise non-leachable zinc compounds into leachable zinc compounds.

The metallurgical plant waste products may comprise different Zn compounds, which are either fully, partly or not leachable under the present ammoniacal conditions. For example the metallurgical residue may contain ZnO, which is ammoniacal leachable, but also ZnS and/or Zn-ferrite, which are partly or not leachable under said conditions. In such a case, it is preferable to convert the partly or non-leachable Zn compounds, such as ZnS and Zn-ferrite to ammoniacal leachable Zn compounds, such as ZnO. This can be achieved by applying a conversion treatment of the waste product or an at least partly leached solid residue with a conversion agent. The same considerations also apply to Pb and Cd compounds, if the said elements are present in the residue.

According to a further aspect of the invention the conversion treatment is an oxidative treatment and/or a reductive treatment. Such a conversion treatment can be applied before a first leaching step but also in between leaching steps. The oxidative treatment could also be applied during a leaching step.

In order to reduce the process steps and provide a more simple and effective process, the metallurgical waste product is first subjected to a conversion step, whereby non-leachable Zn compounds are converted to ammoniacal leachable compounds. After treatment with the leaching solution and separation of the solid from the leaching filtrate the remaining leached solid residue can be used in a metallurgical process as a secondary source, e.g. for iron making.

The ammonium salt is used in conjunction with ammonia to create a buffer system having a stable pH value in range of 8-12 after addition to the residue. Any ammonium salt which in conjunction with ammonia results in a buffer, wherein after addition to the residue the pH of the reaction mixture is in the range of 8-12 can be used.

According to a preferred embodiment the ammonium salt is selected from (NH₄)₂SO₄, NH₄Cl, (NH₄)₂CO₃ or a mixture thereof. When NH₄Cl is used an additional washing step is required to wash the remaining leached solid residue free from Cl-ions. Chloride salts are not desirable in the blast furnace.

According to a further aspect of the invention the process includes a washing step of the leached solid residue after the separation of the leaching filtrate from the leached solid residue in order to wash the remaining leached solid residue free from the ammonium salt ions or other water soluble ions.

In a more preferred embodiment the leaching solution is an ammonia-ammonium sulphate solution. The use of ammonium sulphate ((NH₄)₂SO₄) is preferred because it is a by-product from the coke plant, thus a cheap reagent for the process. Furthermore using ammonium sulphate the leaching reaction can be performed at lower temperatures. The inventors found that the use of ammonium sulphate results in higher leaching yields for Zn from the BF, BOF or BF-BOF dust. If Pb and/or Cd are also present in the BF dust or sludge, said elements are also leached in very high yields resulting in a ferrous residue containing very low Zn, Pb, and Cd amounts, which can be directly used in the sinter plant as a secondary resource for iron making.

The leaching solution having a pH in the range of 8-12 has been prepared by mixing the required amounts of ammonia and ammonium salts. The buffer/leaching solution according to the present invention is preferably a concentrated leaching solution. The amount of ammonium salt added varies from 2 to 8 M (mole/litre). An initial concentration of 4-6 M is preferred. Increasing the concentration to more than 8 M did not improve the Zn recovery. Concentrated aqua ammonia is preferably used. Most preferably for the preparation of a leaching solution having a pH in the range of 10 to 11, a 2 M ammonium salt and a 5 M aqua ammonia are used. The ammonia concentration is preferably at least 5 M.

Temperature is a parameter for the leaching rate which could influence the pH range. With increasing temperature the recovery rate is increased. The inventors have found that in view of the time and amount of Zn recovered the leaching temperatures are in the range of room temperature to 100 °C. Good results have been obtained when the leaching temperature is in the range of 20-80°C, preferably in the range of 20-70 °C. Advantageously the temperature is in the range of 20-60 °C.

The inventors have further found that he weight ratio (L/S) of leaching solution to the solid waste or solid residue may also influence the leaching kinetics. When the L/S ratio is less than 2 the leaching of Zn and optionally of Pb and/or Cd is not satisfactory. Preferably the L/S ratio is at least 2, preferably at least 5, more preferably at least 7.

The conversion treatment is performed by using an oxidation agent and/or a roasting agent.

In a preferred embodiment the conversion treatment of the metallurgical waste comprises an oxidative treatment and/or a reductive treatment with a roasting agent. Applying separate conversion treatment steps more than 90 wt% of the non-leachable Zn compounds are converted to leachable Zn compounds in ammoniacal leaching conditions according to the present invention.

In a preferred embodiment the oxidative treatment is performed by using an oxidizing agent. Good results have been achieved when the oxidizing agent is air, oxygen enriched air, oxygen, or H₂O₂. Any oxidizing agent suitable to convert the ammoniacal non-leachable Zn compounds to ammoniacal leachable Zn compounds may also be used.

In a further preferred embodiment the roasting agent is preferably an reductive roasting agent, more preferably a high temperature roasting agent. Good results have been achieved when the roasting agent is C, CaCO₃, Na₂CO₃ or a mixture thereof. Any agent suitable for roasting of the metallurgical waste or residue, preferably at elevated temperature, thereby converting the ammoniacal non-leachable Zn compounds to ammoniacal leachable Zn compounds may also be used.

The inventors found that the higher the roasting temperature the higher the Zn removal rate is. This is due to the thermodynamics of the ZnS oxidation and Zn-ferrite decomposition and Zn evaporation. In particular the inventors found that roasting flue dust of BF, BOF or BF-BOF mixture with a roasting agent at high temperatures the conversion of zinc sulfide and/or zinc ferrite into zinc oxide is very high. However in view of the costs and in order to increase the Zn recovery in the leaching solution the evaporation of Zn and the melting of ferrous minerals should be as low as possible. Therefore the roasting of the solid waste or residues should be performed at elevated temperatures, preferably at a temperature in the range of 750 to 950 °C, preferably for a time period of at most 5 hours, more preferably at most 3 hours, most preferably at most 2 hours and preferably use of excess of the roasting agent. It is observed that if the temperature is less than 750 °C the zinc removal decreases significantly. This is probably because at temperatures lower than 750 °C the partly or non-leachable Zn compounds are not sufficiently converted into the leachable ones. A too high temperature above 950 °C results in a high amount of zinc evaporation and iron oxide reduction worsening the material handling properties. According to a further aspect of the invention the total amount of the non-leachable zinc compounds in the waste product is assessed and the roasting agent is added in a stoichiometric ratio of at least 2, preferably at least 5, more preferably at least 10 to the total amount of the non-leachable zinc compounds. If the roasting agent is not present in excess, i.e. the stoichiometric ratio is less than 2, the effectiveness of the zinc conversion decreases. This can be explained by the consumption of roasting agent. Long roasting times of more than 5 hours are not preferred, because it will increase the overall operational costs making the process less financially attractive.

The inventors observed that when the oxidative roasting is performed for at most 1 hour high zinc conversion is observed. When the metallurgical residues are treated with an oxidizing roasting agent at high temperatures and then mixed with the leaching solution at least 80 wt% of the leachable Zn is extracted after 30 minutes, and after 60 minutes at least 90 wt% (wt% based on the total amount of the leachable Zn being present in the residue). The inventors further found that if Pb and/or Cd are present in the residue, said metals are removed in high yields. It should be mentioned that during oxidative roasting the most amount of carbon is burnt.

The inventors found that when applying the roasting conditions according to the present invention on BF flue dust a zinc removal of at least 70 wt% has been achieved (wt% based on the total amount of Zn present in the residue).

According to a further aspect of the invention the initial leaching solution is used before separating the leaching filtrate and leached solid residue till the leaching filtrate comprises at least 60 wt% Zn, preferably at least 70 wt%, more preferably at least 80 wt%, most preferably at least 90 wt% (wt% based on the total amount of the leachable Zn being present in the initial waste product).

At the same time the leaching filtrate could comprise as much as 50 wt%, or even 80 - 90 wt%, of Pb and/or Cd (wt% based on the total amount of the leachable Pb and Cd being present in the initial residue).

Preferably the process is continued till at least 60 wt% Zn has been recovered. , In case of large amounts of Pb and Cd in the waste product the process is continued till at least 40 wt% Pb and/or 50 wt% Cd have been recovered (wt% based on the total amount of the Zn, Pb and Cd being present in the initial residue).

According to a further aspect of the invention the waste product is subjected to as many leaching steps to arrive at a leached solid residue comprising at most 2.0 wt% Zn, preferably at most 1.0 wt% Zn, more preferably at most 0.5 wt% Zn (wt% are based on the total amount of solid residue).

Optionally, the waste product is subjected to as many leaching steps to arrive at a leached solid residue comprising at most 1.0 wt% Pb and/or Cd, preferably less than 0.5 wt% Pb and/or less than 0.1 wt% Cd (wt% are based on the total amount of the residue).

According to a further preferred embodiment after the removal of Zn from the leaching filtrate, the leaching solution is used again in the process. The pH value is preferably measured or monitored during operation and if necessary adjusted to pH 8-12, by adding ammonia and/or an ammonium salt.

It is a further object of the invention to provide a leaching solution for selectively leaching (reducing) the amounts of heavy metals comprising Zn and optionally Pb an/or Cd from a metallurgical plant residue containing Fe comprising ammonia and an ammonium salt, wherein the pH of the leaching solution is in the range of 8-12.

It is to understand that any of the process steps or any process cycle according to the present invention can be performed more than once, e.g. in successive reactors. Such an embodiment is preferred when the amounts of non-leachable Zn compounds or Zn compounds with a very low conversion rate are present in the metallurgical residue. In this way it is ensured that the final residue contains low zinc amounts and it is suitable for recycling.

In a further preferred embodiment the process according to the present invention is provided with a zinc recovery step.. The so obtained zinc metal can be safely stored and further used. The same applies to any heavy metal being present in the leaching filtrate such as Pb or Cd.

According to a preferred embodiment the metallurgical plant residue is blast furnace sludge or dust, BOF sludge or dust or a mixture thereof. In the BF sludge or dust the Zn compounds comprise ZnO and ZnS. BOF sludge or dust comprises ZnO and Zinc ferrite.

According to a preferred embodiment the metallurgical waste product is a BF-BOF mixture, wherein the BF:BOF weight ratio is in the range of 1:10 to 10:1. Good results have been obtained by 1:5 to 5:1. Advantageously the weight ratio is in the range of 1:2 to 2:1. The inventors found that carbon in the mixing BF and BOF sludge or dust in said weight ratios, which is present in the BF dust or sludge, acts as a reducing agent and in combination with the added roasting agent the Zn conversion and consequently the Zn recovery is enhanced.

A metallurgical waste could comprise:
Fe:1-60 wt%,
C: 1-60 wt%,
Zn: 0.01-30 wt%,
Pb: 0-3.5 wt%, Cd: 0-1.0 wt%, based on the total weight of the waste product.

The invention will be elucidated hereafter. The following experiments show, by way of non-limiting examples, the advantageous characteristics conferred by the invention.

The feed material and the experiment outputs were characterized according to the methods given below.

### Phase Composition Determination (X-ray Diffraction, XRD)

A Bruker D8 Advance diffractometer is used in combination with Bragg-Brentano geometry and a Lynxeye position sensitive detector. The data is evaluated with Bruker software. Amorphous compounds or compounds where the crystalline structure is altered due to deformation cannot be characterized by XRD.

Phase fractions have been determined by powder XRD and subsequent Rietveld analysis. The XRD patterns were recorded in the range of 10 to 130° (2 Q) in reflection mode using a fully automated Bruker D4 diffractometer (CoKa-radiation) equipped with a position sensitive detector. Operating conditions were 30 kV and 40 mA. Quantitative determination of phase fractions was also performed by Rietveld analysis. Unit cell parameters, background coefficients, preferred orientations, profile parameters and phase proportions were refined using the Bruker Topas software package for Rietveld refinement.

### Chemical Composition Determination (Carbon, Sulfur, XRF and ICP)

Carbon and Sulfur: The carbon and sulfur content were analyzed in an Eltra analyser. A sample is placed in an oxygen flow and burned in a High Frequency induction furnace/oven. Carbon is converted to CO₂ and S to SO₃ the concentrations are measured by infrared detection. After an XRF analysis the sample is boiled in hydrochloric acid and CO₂ gas is released, which is captured in a mixture of pyridine and mono-ethanolamine. The mixture turns acidic when it captures CO₂ this acid is titrated with a base (tetrabutylammonium hydroxide).

XRF (X-ray Fluorescence): For an overview of all the main elements that are present in solid samples a XRF analysis is used. A sample is weighed in a platinum cup on a known flux. The sample is pre-oxidized at 1000°C in a Linn furnace. Most of the carbon is converted to CO2. The remaining part of the sample is dissolved in a flux that is a mixture of Li-tetraborat and Li-metaborat. The mixture is poured into a Pt-dish this results in a pearl or glass-like disc on the dish. This disc is analyzed on the X-ray spectrometer (An Axios of PAN analytical).

ICP (Inductively Coupled Plasma): For all liquid samples and the precise content of Fe, Zn, Pb, Cd and Cu in solid samples ICP facilities are used. The sample is put in a sealed Teflon tube that is submerged and unlocked in aqua regia. The aqua regia and the teflon tube are placed in a microwave (CEM Mars 5). After the aqua regia mixture is filtrated the filtrate and residue are analyzed with ICP-OES (iCAP 6300 RADIAL of Thermo Fisher).

BF, BOF or BOF-BF mixture (sludge or residue): Starting material was dried for 24 hours at 106 °C and ground with mortar and pestle. In case of the BOF-BF mixture dried material has been mixed in different ratios.

Before the start of each experiment the samples were weighed and chemically analysed.

### Roasting Experiments

The dried sample was mixed with a roasting agent, and placed in a pre-heated oven (In the case of inert roasting experiments under N₂ atmosphere a heating- and cooling rate of 10°C per minute was applied). After a defined roasting time period the roasted mixture was taken out of the oven and cooled at room temperature, weighed and chemically analyzed.

BF and/or BOF flue dust has been roasted at a temperature in the range of 750 and 950°C for 1 hour using high dosage of sodium carbonate to zinc ferritecompared to total amount of zinc ferrite in the flue dust. The stoichiometric ratio of sodium carbonate was in the range of 8-9. The reaction mixture was leached with a leaching solution according to the invention. It was found that at least 80 wt% of the zinc was recovered (wt% based on the Zn being present in the residue). Almost all carbon was burnt during roasting and all iron remained in the leached solid residue. It was further found that the average zinc content in the residue was lowered significantly and the remaining solid residue could directly be reused.

### Leaching Experiments

The leaching solution has been prepared by mixing ammonia and the ammonium salt and added to a reactor containing the dried sample. The mixture optionally heated to the desired temperature and stirred at said temperature. During the experiment the temperature T and pH were monitored and oxygen was purged thought the mixture. T and pH were kept constant during the experiment. If necessary the pH value has been adjusted by adding leaching solution or ammonia solution. After completion of the experiment the leaching filtrate was separated from the solid. In some cases the solid residue after filtration undergoes the same leaching procedure at least once.

Samples in defined time intervals have been taken and chemically analyzed. The samples are filtrated and the filtrate and solid are chemically analyzed.

**Table 1. Examples of the leaching tests (here wt% are based on the total amount of the Zn being initially present in the metallurgical residue).**

| Test | Source sludge | Oxidizing or roasting agent | Leaching solution | Fe wt % | Zn wt% |
|---|---|---|---|---|---|
| 1 | BF | --- | NH₃-(NH₄)₂SO₄ | 0 - 1 | 40 |
| 2 | BF | O₂ | NH₃-(NH₄)₂SO₄ | 0 - 1 | 60 |
| 3 | BF | Na₂CO₃ | NH₃-(NH₄)₂SO₄ | 0 - 1 | 70 |
| 4 | BF+BOF | Na₂CO₃ | NH₃-(NH₄)₂SO₄ | 0 - 1 | 87 |

In example 1 BF dust was only treated with NH₃-(NH₄)₂SO₄ leaching solution. Leaching solution & conditions: Ammonia 5M, Ammonium sulphate 2M, pH 10.5 at 30 °C, L/S = 5 in weight, 60 min leaching time. Temperature and pH were monitored and kept constant in the range of 10-11. Only 40 wt% of Zn being present in the initial residue has been recovered.

In example 2 an NH₃-(NH₄)₂SO₄ leaching solution according to example 1 has been first added to the BF dust and then the reaction mixture is oxidative treated with oxygen as oxidizing agent. Oxygen (20 L/hour) was purged thought the reaction mixture for at least 1 hour. 60 wt% of Zn being present in the initial residue has been recovered. The final ferrous residue can be directly used in the sinter plant as a secondary resource for iron making.

In example 3 the BF dust has been first oxidative treated with a roasting agent and then leached with a NH₃-(NH₄)₂SO₄ leaching solution according to example 1. Roasting was conducted at 860 °C in air for 60 min and Na₂CO₃ has been used as roasting agent. For the oxidative treatment a stoichiometric ratio of at least 8 (Na₂CO₃ versus ZnFe₂O₄) was used. 70 wt% of Zn being present in the initial residue has been recovered. The final ferrous residue can be directly used in the sinter plant as secondary resource for iron making.

In example 4 a mixture of BF-BOF dust in a 1:1 weight ratio has been first oxidative treated with Na₂CO₃ as roasting agent and then leached with a NH₃-(NH₄)₂SO₄ leaching solution according to example 1. For the oxidative treatment a stoichiometric ratio of 8.8 Na₂CO₃ to ZnFe₂O₄ was used. Roasting was conducted at 860 °C in air for 60 min. 87 wt% Zn has been recovered from the initial residue. The final ferrous residue can be directly recycled in the sinter plant as secondary resource for iron making.

## Claims

1. A process for selectively reducing the amounts of heavy metals comprising Zn from a metallurgical plant waste product containing Fe comprising the steps of:
- selectively leaching Zn by mixing the waste product with a leaching solution comprising ammonia and an ammonium salt with a pH in the range of 8-12 into a reaction mixture, and
- controlling the pH of the reaction mixture and keeping the pH in the range of 8-12.

2. Process according to claim 1, comprising the steps of:
- separating the reaction mixture into a leaching filtrate and a leached solid residue, and
- recovering Zn from the leaching filtrate.

3. Process according to claim 2, wherein Zn is recovered from the leaching filtrate by electrowinning.

4. Process according to any of the preceding claims, wherein the waste product is subjected to two or more leaching steps.

5. Process according to claim 4, wherein successive leaching steps are carried out in a counter current system.

6. Process according to any of the preceding claims, wherein the process further comprises a conversion treatment of the waste product and/or of a leached solid residue to convert otherwise non-leachable zinc compounds into leachable zinc compounds.

7. Process according to claim 6, wherein the conversion treatment is an oxidative treatment and/or a reductive treatment.

8. Process according to claims 6 or 7, wherein the waste product is subjected to a conversion treatment prior to the first leaching step.

9. Process according to claim 8, wherein the conversion treatment is carried out by roasting the waste product in combination with a roasting agent selected from C, CaCO₃, Na₂CO₃ or a mixture thereof.

10. Process according to any of claims 2-8, wherein the waste product is subjected to an oxidative treatment during one or more leaching steps.

11. Process according to any of claims 2-10, wherein the oxidative treatment comprise the use of air, oxygen-enriched air, oxygen, H₂O₂ or a mixture thereof.

12. Process according to any of the preceding claims, wherein the pH of the reaction mixture is in the range of 8-11, preferably in the range of 8.5-10.5.

13. Process according to any of the preceding claims, wherein the ammonium salt is selected from (NH₄)₂SO₄, NH₄Cl, (NH₄)₂CO₃ or a mixture thereof.

14. Process according to any of the preceding claims, wherein the ammonium salt concentration is in the range of 2-8 M, preferably 4-6 M.

15. Process according to claim 9, wherein the total amount of the non-leachable zinc compounds in the waste product is assessed and the roasting agent is added in a stoichiometric ratio of at least 2, preferably at least 5, more preferably at least 10 to the total amount of the non-leachable zinc compounds.

16. The process according to any of the preceding claims, wherein the temperature of the reaction mixture is in the range of 20-80°C, preferably in the range of 20-70 °C, more preferably in the range of 20-60 °C.

17. The process according to any of the claims 1-12, wherein the weight ratio (L/S) of leaching solution to the solid waste is at least 2, preferably at least 5, more preferably at least 7.

18. Process according to any of the preceding claims, wherein the waste product is subjected to as many leaching steps to arrive at a leached solid residue comprising at most 2.0 wt% Zn, preferably at most 1.0 wt% Zn, more preferably at most 0.5 wt% Zn.
